# EUROPÄISCHE PATENTSCHRIFT

(11) **EP 1 329 658 B1**
(45) Veröffentlichungstag und Bekanntmachung des Hinweises auf die Patenterteilung: **11.05.2005**
(21) Anmeldenummer: 02028581.3
(22) Anmeldetag: 20.12.2002
(51) Int. Cl.: F16K 15/08

(54) **Rückflussverhinderer**
Non-return valve
Dispositif anti-retour

(30) Priorität: 19.01.2002 DE 20200792 U
(43) Veröffentlichungstag der Anmeldung: 23.07.2003
(73) Patentinhaber: Dresser Valves Europe GmbH, 41751 Viersen (DE)
(72) Erfinder: Durst, Christian, 41363 Jüchen (DE); Krude, Michael, 41189 Mönchengladbach (DE)
(74) Vertreter: Moser, Jörg Michael

(56) Entgegenhaltungen:
- DE-A- 19 620 140
- DE-B- 1 035 995
- GB-A- 251 472
- GB-A- 768 341

## Beschreibung

Die Erfindung betrifft einen Rückflussverhinderer für gasförmige und flüssige Medien, mit einem Gehäuse, einem zentrisch im Gehäuse angeordneten Düsenkörper sowie einem den Düsenkörper koaxial umgebenden Düsenring, wobei ein zwischen dem Gehäuse und dem Düsenkörper ausgebildeter ringförmiger Strömungskanal über ein ringfömiges Sperrelement verschließbar ist, das über mindestens ein Federelement sowie mindestens ein Führungselement am Düsenring derart gelagert ist, dass das Sperrelement aufgrund der Strömung des Mediums zwischen einer den Strömungskanal freigebenden Offenstellung und einer den Strömungskanal verschließenden Sperrstellung bewegbar ist.

Derartige Rückflussverhinderer sind als Düsenrückschlagventile seit langer Zeit bekannt und werden in verschiedenen Ausführungsformen gebaut. Diese Düsenrückschlagventile werden in Gas- oder Flüssigkeitsrohrleitungen eingesetzt, um im Falle eines Strömungsabbruchs, beispielsweise aufgrund eines Pumpenausfalls, den Rückfluß des Mediums in der Leitung zu verhindern. Sobald die Strömung abbricht oder abnimmt, schließt das Sperrelement den Strömungskanal selbsttätig und schlagfrei mit Hilfe des Federelements. Um sicherzustellen, dass das Sperrelement exakt und abdichtend gegen den Dichtsitz am Gehäuse sowie am Düsenkörper angedrückt wird, sind bei den der Praxis bekannten Düsenrückschlagventilen in Ringtellerbauart drei oder mehr Führungselemente vorgesehen, wobei jedes Führungselement als bogenförmiger Federarm ausgebildet ist, der an einem Ende mit dem Düsenring verschraubt ist und dessen anderes Ende über ein Federelement in Schließrichtung vorgespannt ist und über ein Kugelelement am Sperrelement anliegt.

Ein solcher gattungsgemäßer Rückflussverhinderer ist beispielsweise aus der DE 196 20 140 A1 bekannt. Zwar haben sich diese bekannten Rückflussverhinderer in der Praxis durchaus bewährt, jedoch ist der konstruktive Aufwand zur Ausgestaltung der Führungselemente aufgrund der Vielzahl von Teilen sehr groß, was wiederum hohe Fertigungskosten zur Folge hat.

Davon ausgehend liegt der Erfindung die Aufgabe zugrunde, einen Rückflussverhinderer der eingangs genannten Art zu schaffen, der einfach aufgebaut und kostengünstig zu fertigen ist.

Die Lösung dieser Aufgabenstellung ist erfindungsgemäß dadurch gekennzeichnet, dass das Führungselement als einteiliger, in Längsrichtung des Strömungskanals elastisch verformbarer Lenker ausgebildet ist.

Aufgrund der erfindungsgemäßen Ausgestaltung des Federelements als einteiliger elastisch verformbarer Lenker kann die Anzahl der herzustellenden und zu montierenden Bauteile gegenüber dem Stand der Technik deutlich reduziert werden, wodurch auch eine erhebliche Kosten- und Gewichtseinsparung erzielt wird.

Gemäß einer bevorzugten Ausführungsform der Erfindung weist der Lenker mindestens zwei konzentrisch ineinanderliegende Ringe auf, wobei jeweils zwei unmittelbar nebeneinander angeordnete Ringe über mindestens einen gemeinsamen Steg miteinander verbunden sind. Diese Konstruktion der über mindestens einen Steg miteinander verbundenen konzentrisch ineinanderliegend angeordneten Ringe ermöglicht die Herstellung eines einfach aufgebauten und zuverlässig arbeitenden einteiliegen federelastischen Führungselements.

Gemäß einer ersten Ausführungsform der Erfindung sind die die einzelnen Ringe des Lenkers miteinander verbindenden Stege im wesentlichen radial ausgerichtet.

Mit einer zweiten erfindungsgemäßen Ausführungsform wird vorgeschlagen, die die einzelnen Ringe des Lenkers miteinander verbindenden Stege im wesentlichen tangential auszurichten, wodurch der Federweg zwischen den miteinander verbundenen Ringen aufgrund der größeren Steglänge vergrößert werden kann.

Eine weitere Vergrößerung des Federwegs wird gemäß einer dritten erfindungsgemäßen Ausführungsform dadurch erzielt, dass die die einzelnen Ringe des Lenkers miteinander verbindenden Stege im wesentlichen bogenförmig ausgerichtet sind, wobei der Krümmungsradius des mindestens einen bogenförmigen Stegs vorzugsweise im wesentlichen dem Krümmungsradius des jeweils weiter innen liegenden Rings entspricht.

Um insbesondere bei Lenkern mit einem großen Durchmesser ein verkantungsfreies und gleichmäßiges Auslenken der einzelnen über die Stege miteinander verbundenen Ringe und somit ein exaktes Führen des Sperrelements zu ermöglichen, wird gemäß einer bevorzugten Ausführungsform der Erfindung vorgeschlagen, dass mehrere Stege gleichmäßig über den Umfang der miteinander zu verbindenden Ringe verteilt angeordnet sind.

Gemäß einer praktischen Ausführungsform der Erfindung wird vorgeschlagen, dass der Lenker einerseits am Düsenring und andererseits am Sperrelement festgelegt ist. Diese Kopplung zwischen Düsenring und Sperrelement über das Lenker-Führungselement gewährleistet eine stets lagegenaue Positionierung des Sperrelements zur vollständigen und gleichmäßigen Abdichtung des Strömungskanals zwischen dem Düsenkörper und dem Gehäuse. Das Festlegen des Lenkers erfolgt vorteilhafterweise so, dass der äußerste der konzentrisch ineinanderliegenden Ringe des Lenkers am Düsenring und der innerste der konzentrisch ineinanderliegenden Ringe des Lenkers am Sperrelement festlegbar ist.

Weiterhin wird mit der Erfindung vorgeschlagen, dass am Düsenring und am Sperrelement jeweils Ausnehmungen oder Nuten, insbesondere umlaufende Ringnuten, zur Aufnahme der radial außenliegenden Umfangsfläche des äußersten Rings und der radial innenliegenden Umfangsfläche des innersten Rings des Lenkers ausgebildet sind. Gemäß einer weiteren Ausführungsform der Erfindung sind zum Festlegen der Ringe in den Nuten des Düsenrings und/oder des Sperrelements an der radial außenliegenden Umfangsfläche des äußersten Rings und/oder an der radial innenliegenden Umfangsfläche des innersten Rings des Lenkers radial nach außen bzw. radial nach innen weisende Vorsprünge ausgebildet, die in die entsprechenden Nuten einsetzbar sind.

Schließlich wird mit der Erfindung vorgeschlagen, dass mehrere Führungselemente übereinander angeordnet als Lenkerpaket in das Gehäuse einsetzbar sind.

Weitere Merkmale und Vorteile der Erfindung ergeben sich anhand der zugehörigen Zeichnung, in der ein Ausführungsbeispiel eines erfindungsgemäßen Rückflussverhinderers nur beispielhaft schematisch dargestellt ist. In der Zeichnung zeigt:
- Fig. 1: einen schematischen Längsschnitt durch einen erfindungsgemäßen Rückflussverhinderer;
- Fig. 2: eine Draufsicht auf ein Führungselement eines erfindungsgemäßen Rückflussverhinderers und
- Fig. 3: einen Schnitt entlang der Schnittlinie III-III gemäß Fig. 2, das Führungselement in der ausgelenkten Stellung darstellend.

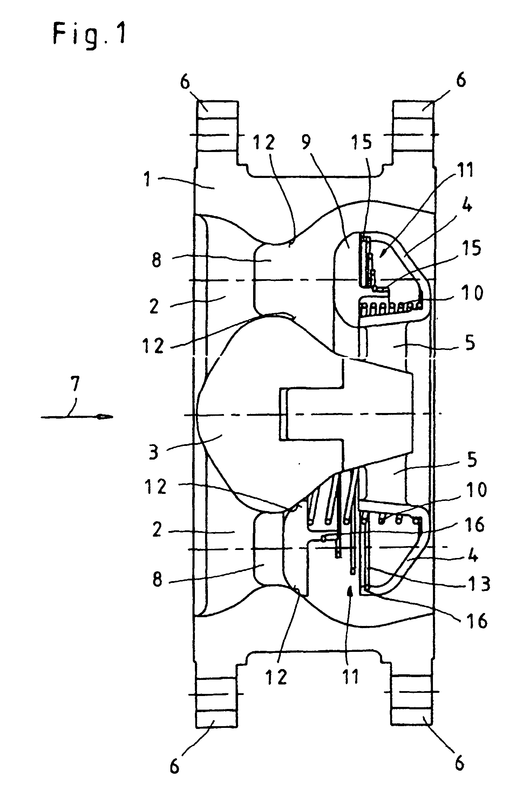

Der in Fig. 1 dargestellte Rückflussverhinderer besteht im wesentlichen aus einem Gehäuse 1, einem über Stege 2 mit dem Gehäuse 1 verbundenen, zentrisch im Gehäuse 1 angeordneten Düsenkörper 3 sowie einem den Düsenkörper 3 koaxial umgebenden Düsenring 4, der seinerseits über Stege 5 mit dem Düsenkörper 3 verbunden ist.

Das Gehäuse 1 weist an beiden Enden Flansche 6 auf, um den Rückflussverhinderer an Rohrleitungen und/oder andere durchströmte Anlagenteile anschließen zu können. Der in Fig. 1 dargestellte Rückflussverhinderer wird in Richtung des Pfeils 7 von links nach rechts durchströmt, wobei zwischen dem Gehäuse 1 und dem Düsenkörper 3 ein ringförmiger Strömungskanal 8 mit sich zunächst verjüngendem und anschließend wieder erweiterndem Durchmesser ausgebildet ist.

Um eine Rückströmung in die dem Pfeil 7 entgegengesetzte Richtung zu verhindern, ist im Inneren des Gehäuses 1 ein Sperrelement 9 angeordnet, über das der Strömungskanal 8 vollständig abdichtbar ist.

Die Darstellung gemäß Fig. 1 zeigt das Sperrelement 9 einerseits in der den Strömungskanal 8 freigebenden Offenstellung (oberer Hälfte von Fig. 1) und andererseits in der den Strömungskanal 8 verschließenden Sperrstellung (untere Hälfte von Fig. 1). Diese Darstellung wurde nur zur Verdeutlichung der Wirkungsweise des Sperrelements 9 gewählt. In der Praxis ist eine solche gemischte Stellung des Sperrelements 9 einerseits unzulässig und andererseits schon aufgrund der starren Ausbildung des einteiligen Sperrelements 9 ausgeschlossen.

Wie aus der Abbildung Fig. 1 ersichtlich, ist das Sperrelement 9 unter Zwischenschaltung eines Federelements 10 sowie eines als Lenker 11 ausgebildeten Führungselements am Düsenring 4 gelagert. Die in der unteren Bildhälfte dargestellte Sperrstellung des Sperrelements 9 zeigt, dass das Sperrelement 9 über das Federelement 10 in die Sperrstellung vorgespannt ist, in der das Sperrelement 9 abdichtend an am Gehäuse 1 und Düsenkörper 3 ausgebildeten Dichtsitzen 12 anliegt. Die Vorspannung des Federelements 10 auf das Sporrelement 9 ist so ausgelegt, dass das Sperrelement 9 den ringförmigen Strömungskanal 8 absperrt, sobald die Strömung in Richtung des Pfeils 7 abbbricht oder ein vorgebbares Maß unterschreitet. Der Rückflussverhinderer schließt somit selbsttätig und schlagfrei, bevor eine Rückströmung in der dem Pfeil 7 entgegengestzten Richtung einsetzt.

Bei der dargestellten Ausführungsform ist das Federelement 10 als an der Unterseite des Sperrelements 9 anliegende Wendelfeder ausgebildet, die in der Offenstellung des Sperrelements 9 vollständige Aufnahme im Düsenring 4 findet.

Der als Führungselement wirkende Lenker 11 dient dazu, das Sperrelement 9 einerseits innerhalb des Gehäuses 1 räumlich zu fixieren und andererseits dafür zu sorgen, dass das Sperrelement 9 über das Federelement 10 zuverlässig abdichtend und lagegenau gegen die Dichtsitze 12 angedrückt wird.

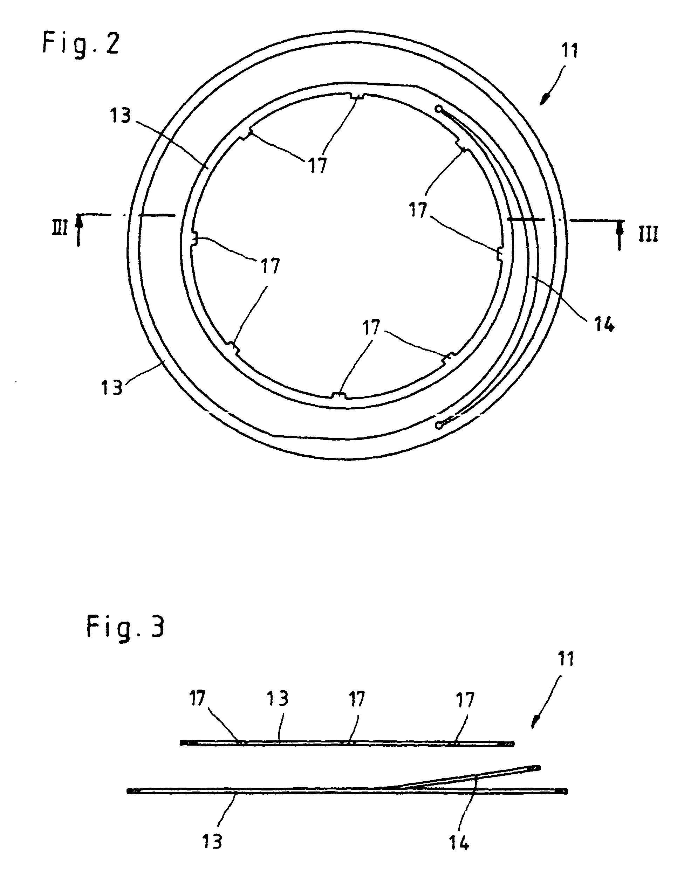

Der Aufbau und die Wirkungsweise des Lenkers 11 ergibt sich aus einer Zusammenschau der Abbildungen Fig. 2 und 3 mit der Abbildung Fig. 1.

Wie aus Fig. 2 ersichtlich, besteht der Lenker 11 bei der nur beispielhaft dargestellten Ausführungsform aus zwei konzentrisch zueinander angeordneten, ineinanderliegenden Ringen 13, die über einen bogenförmigen Steg 14 einstückig miteinander verbunden sind, dessen Krümmungsradius im wesentlichen dem Krümmungsradius des inneren Rings 13 entspricht.

Alternativ zu dieser dargestellten Ausführungsform kann der Lenker 11 auch aus mehreren konzentrisch zueinander angeordneten, ineinanderliegenden Ringe 13 aufgebaut sein, wobei jeweils zwei unmittelbar benachbarte Ringe 13 über wenigstens einen Steg 14 miteinander verbunden sind. Die Stege 14 können dabei beispielsweise im wesentlichen radial, tangential oder bogenförmig verlaufend ausgerichtet sein. Insbesondere bei Lenkern 11 mit einem großen Durchmesser kann es zudem vorteilhaft sein, wenn mehrere Stege 14 möglichst gleichmäßig über den Umfang der Ringe 13 verteilt angeordnet sind, um ein geichmäßiges und verkantungsfreies Auslenken des Lenkers 11 und somit Führen des Sperrelements 9 zu gewährleisten.

Die Verbindung der beiden Ringe 13 des Lenkers 11 über den Steg 14 ermöglicht ein elastisches Verformen des Lenkers 11 in Längsrichtung des Strömungskanals 8, wie dies der Darstellung gemäß Fig. 3 zu entnehmen ist.

Wie aus Fig. 1 ersichtlich, ist der Lenker 11 einerseits am Düsenring 4 und andererseits am Sperrelement 9 festgelegt, wodurch das Sperrelement 9 konzentrisch zum Düsenkörper 3 innerhalb des Gehäuses 1 fixiert ist. In Fig. 1 sind beispielhaft zwei Ausführungsformen zum Festlegen des Lenkers 11 am Düsenring 4 bzw. am Sperrelement 9 dargestellt. In der oberen Bildhälfte (Offenstellung) sind sowohl im Düsenring 4 als auch im Sperrelement 9 Hinterschneidungen bildende Ausnehmungen 15 ausgebildet, in die der äußere Ring 13 bzw. der innere Ring 13 des Lenkers 11 einsetzbar sind.

Bei der in der unteren Bildhälfte (Sperrstellung) dargestellten Ausführungsform sind sowohl im Düsenring 4 als auch im Sperrelement 9 Nuten 16, vorzugsweise umlaufende Ringnuten, zur Aufnahme des äußersten Rings 13 und des innersten Rings 13 des Lenkers 11 ausgebildet. Wie weiterhin aus Fig. 2 ersichtlich, kann das Festlegen des Lenkers 11 in den Nuten 16 dadurch erleichtert werden, dass an der radial außenliegenden Umfangsfläche des äußersten Rings 13 und/oder an der radial innenliegenden Umfangsfläche des innersten Rings 13 des Lenkers 11 radial nach außen bzw. radial nach innen weisende Vorsprünge 17 zur Aufnahme in den Nuten 16 des Düsenrings 4 und/oder des Sperrelements 9 ausgebildet sind.

Neben der Verwendung nur eines einteiligen Lenkers 11 ist es selbstverständlich auch möglich, mehrere Führungselemente übereinander angeordnet als Lenkerpaket in das Gehäuse 1 einzusetzen, wenn dies erforderlich ist.

Durch die Verwendung des einteiligen Lenker-Führungselements wird bei dem dargestellten Rückflussverhinderer gegenüber dem Stand der Technik die Anzahl der Bauteile und somit die Gesamtmasse des Bauteils deutlich reduziert, weshalb ein solcher Rückflussverhinderer einfacher und kostengünstiger zu fertigen ist.

Darüber hinaus wird aufgrund des einteiligen Lenkers 11 bei einer reibungsfreien Führung des in Ringtellerbauweise gefertigten Sperrelements 9 eine besonders kompakte kurze Bauweise des Rückflussverhinderers ermöglicht, wie sie ansonsten nur bei Volltellerkonstruktionen oder nicht reibungsfrei arbeitenden Stößelführungen möglich ist. Diese kurze und kompakte Bauweise verringert die durch den Einbau eines Rückflussverhinderers bedingten zwangsläufigen Druckerluste ganz erheblich.

### Bezugszeichenliste

- 1: Gehäuse
- 2: Steg
- 3: Düsenkörper
- 4: Düsenring
- 5: Steg
- 6: Flansch
- 7: Pfeil
- 8: Strömungskanal
- 9: Sperrelement
- 10: Federelement
- 11: Lenker
- 12: Dichtsitz
- 13: Ring
- 14: Steg
- 15: Ausnehmung
- 16: Nut
- 17: Vorsprung

## Patentansprüche

1. Rückflussverhinderer für gasförmige und flüssige Medien, mit einem Gehäuse (1), einem zentrisch im Gehäuse (1) angeordneten Düsenkörper (3) sowie einem den Düsenkörper (3) koaxial umgebenden Düsenring (4), wobei ein zwischen dem Gehäuse (1) und dem Düsenkörper (3) ausgebildeter ringförmiger Strömungskanal (8) über ein ringfömiges Sperrelement (9) verschließbar ist, das über mindestens ein Federelement (10) sowie mindestens ein Führungselement am Düsenring (4) derart gelagert ist, dass das Sperrelement (9) aufgrund der Strömung des Mediums zwischen einer den Strömungskanal (8) freigebenden Offenstellung und einer den Strömungskanal (8) verschließenden Sperrstellung bewegbar ist,
**dadurch gekennzeichnet,**
**dass** das Führungselement als einteiliger, in Längsrichtung des Strömungskanals (8) elastisch verformbarer Lenker (11) ausgebildet ist.

2. Rückflussverhinderer nach Anspruch 1, **dadurch gekennzeichnet, dass** der Lenker (11) mindestens zwei konzentrisch ineinanderliegende Ringe (13) aufweist, wobei jeweils zwei unmittelbar nebeneinander angeordnete Ringe (13) über mindestens einen gemeinsamen Steg (14) miteinander verbunden sind.

3. Rückflussverhinderer nach Anspruch 2, **dadurch gekennzeichnet, dass** der mindestens eine Steg (14) im wesentlichen radial ausgerichtet ist.

4. Rückflussverhinderer nach Anspruch 2, **dadurch gekennzeichnet, dass** der mindestens eine Steg (14) im wesentlichen tangential ausgerichtet ist.

5. Rückflussverhinderer nach Anspruch 2, **dadurch gekennzeichnet, dass** der mindestens eine Steg (14) im wesentlichen bogenförmig ausgerichtet ist.

6. Rückflussverhinderer nach Anspruch 5, **dadurch gekennzeichnet, dass** der Krümmungsradius des mindestens einen bogenförmigen Stegs (14) im wesentlichen dem Krümmungsradius des jeweils weiter innen liegenden Rings (13) entspricht.

7. Rückflussverhinderer nach mindestens einem der Ansprüche 1 bis 6, **dadurch gekennzeichnet, dass** mehrere Stege (14) gleichmäßig über den Umfang der miteinander zu verbindenden Ringe (13) verteilt angeordnet sind.

8. Rückflussverhinderer nach mindestens einem der Ansprüche 1 bis 7, **dadurch gekennzeichnet, dass** der Lenker (11) einerseits am Düsenring (4) und andererseits am Sperrelement (9) festgelegt ist.

9. Rückflussverhinderer nach Anspruch 8, **dadurch gekennzeichnet, dass** der äußerste der konzentrisch ineinanderliegenden Ringe (13) des Lenkers (11) am Düsenring (4) und der innerste der konzentrisch ineinanderliegenden Ringe (13) des Lenkers (11) am Sperrelement (9) festlegbar ist.

10. Rückflussverhinderer nach Anspruch 8 oder 9, **dadurch gekennzeichnet, dass** am Düsenring (4) und am Sperrelement (9) jeweils Ausnehmungen (15) zur Aufnahme des äußersten Rings (13) und des innersten Rings (13) des Lenkers (11) ausgebildet sind.

11. Rückflussverhinderer nach Anspruch 8 oder 9, **dadurch gekennzeichnet, dass** am Düsenring (4) und am Sperrelement (9) jeweils Nuten (16), insbesondere umlaufende Ringnuten, zur Aufnahme des äußersten Rings (13) und des innersten Rings (13) des Lenkers (11) ausgebildet sind.

12. Rückflussverhinderer nach Anspruch 11, **dadurch gekennzeichnet, dass** an der radial außenliegenden Umfangsfläche des äußersten Rings (13) und/oder an der radial innenliegenden Umfangsfläche des innersten Rings (13) des Lenkers (11) radial nach außen bzw. radial nach innen weisende Vorsprünge (17) zur Aufnahme in den Nuten (16) des Düsenrings (4) und/oder des Sperrelements (9) ausgebildet sind.

13. Rückflussverhinderer nach mindestens einem der Ansprüche 1 bis 12, **dadurch gekennzeichnet, dass** mehrere Führungselemente übereinander angeordnet als Lenkerpaket in das Gehäuse (1) einsetzbar sind.

## Claims

1. Non-return valve for gaseous and fluid media, with a housing (I), a nozzle body (3) centrally disposed in the housing (1) and a nozzle ring (4) coaxially surrounding the nozzle body (3), wherein an annular flow channel (8) formed between the housing (1) and the nozzle body (3) can be closed by way of an annuJar shut-off element (9) which is rotatably mounted by way of at least one spring element (10) and at least one guide element on the nozzle ring (4) in such a way that on the basis of the flow of the medium the shut-off element (9) can be moved between an open position which opens the flow channel (8) and a shut-off position which closes the flow channel (8), **characterised in that** the guide element is constructed as a one-piece guide rod (11) which is resiliently deformable in the longitudinal direction of the flow channel (8).

2. Non-return valve as claimed in Claim 1, **characterised in that** the guide rod (11) has at least two rings (13) lying concentrically inside one another, wherein each two rings (13) disposed directly adjacent to one another are connected to one another by way of at least one common web (14).

3. Non-return valve as claimed in Claim 2, **characterised in that** the at least one web (14) is oriented substantially radially.

4. Non-return valve as claimed in Claim 2, **characterised in that** the at least one web (14) is oriented substantially tangentially.

5. Non-return valve as claimed in Claim 2, **characterised in that** the at least one web (14) is oriented substantially in the form of an arc.

6. Non-return valve as claimed in Claim 5, **characterised in that** the radius of curvature of the at least one arcuate web (14) corresponds substantially to the radius of curvature of the ring (13) which lies respectively further inwards.

7. Non-return valve as claimed in at least one of Claims 1 to 6, **characterised in that** a plurality of webs (14) are disposed so that they are distributed uniformly over the circumference of the rings (13) which are to be connected to one another.

8. Non-return valve as claimed in at least one of Claims 1 to 7, **characterised in that** the guide rod (11) is fixed on the nozzle ring (4) on the one hand and on the shut-off element (9) on the other hand.

9. Non-return valve as claimed in Claim 8, **characterised in that** the outermost of the rings (13) of the guide rod (11) which lie concentrically inside one another can be fixed on the nozzle ring (4) and the innermost of the rings (13) of the guide rod (11) which lie concentrically inside one another can be fixed on the shut-off element (9).

10. Non-return valve as claimed in either Claim 8 or 9, **characterised in that** recesses (15) to receive the outermost ring (13) and the innermost ring (13) of the guide rod (11) are formed respectively on the nozzle ring (4) and on the shut-off element (9).

11. Non-return valve as claimed in either Claim 8 or 9, **characterised in that** grooves (16), particularly circumferential annular grooves, to receive the outermost ring (13) and the innermost ring (13) of the guide rod (11) are formed respectively on the nozzle ring (4) and on the shut-off element (9).

12. Non-return valve as claimed in Claim 11, **characterised in that** projections (17) respectively directed radially outwards or radially inwards are formed on the radially outer circumferential surface of the outermost ring (13) and/or on the radially inner circumferential surface of the innermost ring (13) of the guide rod (11) to be received in the grooves (16) of the nozzle ring (4) and/or of the shut-off element (9).

13. Non-return valve as claimed in at least one of Claims 1 to 12, **characterised in that** a plurality of guide elements disposed one above the other as a set of guide rods can be inserted into the housing (1).

## Revendications

1. Dispositif anti-retour de médiums gazeux ou liquides, comportant un boîtier (1), un corps de buse (3) disposé centralement dans le boîtier (1) ainsi qu'une bague de buse (4) entourant coaxialement le corps de buse (3), un canal d'écoulement annulaire (8) conformé entre le boîtier et le corps de buse (3) pouvant être fermé par un élément de blocage annulaire (9) qui est monté sur la bague de buse par l'intermédiaire d'au moins un élément élastique (10) ainsi qu'au moins un élément de guidage de telle sorte que l'élément de blocage (9) est mobile en raison de l'écoulement du médium entre une position ouverte libérant le canal d'écoulement (8) et une position de blocage fermant le canal d'écoulement (8),
**caractérisé en ce que** l'élément de guidage est conformé en bielle (11) déformable élastiquement dans la direction longitudinale du canal d'écoulement (8).

2. Dispositif anti-retour selon la revendication 1, **caractérisé en ce que** la bielle (11) comporte au moins deux bagues (13) disposées concentriquement l'une dans l'autre, les deux bagues (13) disposées l'une tout près de l'autre étant reliées entre elles par au moins une nervure commune (14).

3. Dispositif anti-retour selon la revendication 2, **caractérisé en ce que** l'au moins une nervure (14) est orientée sensiblement radialement.

4. Dispositif anti-retour selon la revendication 2, **caractérisé en ce que** l'au moins une nervure (14) est orientée sensiblement tangentiellement.

5. Dispositif anti-retour selon la revendication 2, **caractérisé en ce que** l'au moins une nervure (14) est orientée sensiblement en arc.

6. Dispositif anti-retour selon la revendication 5, **caractérisé en ce que** le rayon de courbure de l'au moins une nervure en arc (14) correspond sensiblement au rayon de courbure de la bague (13) se trouvant plus à l'intérieur.

7. Dispositif anti-retour selon au moins l'une des revendications 1 à 6,
**caractérisé en ce que** plusieurs nervures (14) sont disposées en étant réparties uniformément sur la périphérie des bagues (13) à relier entre elles.

8. Dispositif anti-retour selon au moins l'une des revendications 1 à 7,
**caractérisé en ce que** la bielle (11) est fixée d'une part à la bague de buse (4) et d'autre part à l'élément de blocage (9).

9. Dispositif anti-retour selon la revendication 8, **caractérisé en ce que** la bague la plus extérieure des bagues (13), disposées concentriquement l'une à l'intérieur de l'autre, de la bielle (11) peut être montée sur la bague de buse (4) et la bague la plus intérieure des bagues (13), disposées concentriquement l'une à l'intérieur de l'autre, de la bielle (11) peut être montée sur l'élément de blocage (9).

10. Dispositif anti-retour selon la revendication 8 ou 9, **caractérisé en ce que** des évidements (15) destinés à recevoir la bague la plus extérieure (13) et la bague la plus intérieure (13) de la bielle (11) sont ménagés au niveau de la bague de buse (4) et de l'élément de blocage (9).

11. Dispositif anti-retour selon la revendication 8 ou 9, **caractérisé en ce que** des gorges (16), en particulier des gorges annulaires périphériques, destinées à recevoir la bague la plus extérieure (13) et la bague la plus intérieure (13) de la bielle (11) sont ménagées au niveau de la bague de buse (4) et de l'élément de blocage (9).

12. Dispositif anti-retour selon la revendication 11, **caractérisé en ce que** des saillies (17) pointant radialement vers l'extérieur resp. radialement vers l'intérieur et destinées à venir se loger dans les gorges (16) de la bague de buse (4) et/ou de l'élément de blocage (9) sont conformées sur la surface périphérique radialement extérieure de la bague la plus extérieure (13) et/ou sur la surface périphérique radialement intérieure de la bague la plus intérieure (13) de la bielle (11).

13. Dispositif anti-retour selon au moins une des revendications 1 à 12,
**caractérisé en ce que** plusieurs éléments de guidage peuvent être insérés dans le boîtier (1) en étant disposés l'un au-dessus de l'autre sous la forme de paquet de bielle.
